# EUROPÄISCHE PATENTSCHRIFT

(11) **EP 2 339 141 B1**
(45) Veröffentlichungstag und Bekanntmachung des Hinweises auf die Patenterteilung: **30.03.2016**
(21) Anmeldenummer: 10194253.0
(22) Anmeldetag: 09.12.2010
(51) Int. Cl.: F02B 37/18

(54) **Brennkraftmaschinensystem und zugehöriges Betriebsverfahren**
Combustion engine and operating method
Moteur à combustion interne et procédé de fonctionnement

(30) Priorität: 23.12.2009 DE 102009060221
(43) Veröffentlichungstag der Anmeldung: 29.06.2011
(73) Patentinhaber: MAHLE International GmbH, 70376 Stuttgart (DE)
(72) Erfinder: Elsässer, Dr. Alfred, 75210 Keltern (DE); Wieske, Peter, 70825 Korntal-Münchingen (DE)
(74) Vertreter: BRP Renaud & Partner mbB Rechtsanwälte Patentanwälte Steuerberater

(56) Entgegenhaltungen:
- DE-A1- 10 234 717
- US-A- 4 477 875
- US-A- 4 790 139

## Beschreibung

Die vorliegende Erfindung betrifft ein Brennkraftmaschinensystem, insbesondere in einem Kraftfahrzeug. Außerdem betrifft die Erfindung ein Verfahren zum Betreiben eines derartigen Brennkraftmaschinensystems.

Ein Brennkraftmaschinensystem umfasst üblicherweise eine Brennkraftmaschine, bei der es sich in der Regel um einen Kolbenmotor handelt. Ferner umfasst das Brennkraftmaschinensystem eine Frischluftanlage zum Zuführen von Frischluft zur Brennkraftmaschine sowie eine Abgasanlage zum Abführen von Abgas von der Brennkraftmaschine. Des Weiteren ist es zur Leistungssteigerung üblich, die Brennkraftmaschine aufzuladen. Hierzu kann das Brennkraftmaschinensystem mit einem Abgasturbolader ausgestattet sein, dessen Turbine in einer Abgasleitung der Abgasanlage angeordnet ist und dessen Verdichter in einer Frischluftleitung der Frischluftanlage angeordnet ist.

Zur Leistungssteuerung der Turbine kann ein die Turbine umgehender Bypass vorgesehen sein, wobei ein Bypassventil zum Einstellen einer gewünschten Bypassströmung dient. Das Bypassventil wird üblicherweise auch als Waste-Gate-Ventil bezeichnet, das eine den Bypass bildende Waste-Gate-Öffnung steuert. Durch Öffnen des Bypasses sinkt der einlassseitige Druck an der Turbine, wodurch sich deren Antriebsleistung reduziert. Wenn also für einen Betriebszustand der Brennkraftmaschine eine bestimmte Turbinenleistung benötigt wird, wird mit Hilfe des Waste-Gate-Ventils die Bypassströmung auf einen Wert eingestellt, der zur gewünschten Turbinenleistung führt. Die jeweilige Einstellung des Bypassventils ist dabei stationär bzw. quasi stationär, sodass das Bypassventil die jeweils eingestellte Position konstant einnimmt. Es ist klar, dass dabei auch gewisse Nachregelvorgänge möglich sind, um die Turbinenleistung möglichst genau einstellen zu können. In jedem Fall entsteht dabei eine weitgehend konstante bzw. gleichmäßige Bypassströmung für den jeweiligen stationären bzw. quasi stationären Betriebszustand.

Aus der US 4 477 875 A ist ein solches Brennkraftmaschinensystem bekannt, das eine Rückführleitung zum Rückführen von Abgas zur Frischluftanlage aufweist. In der Abgasanlage ist zudem eine Bypassleitung zur Umgehung der Turbine vorgesehen, der über einen Durchlass mit der Abgasleitung verbunden ist, wobei im Durchlass ein Bypassventil angeordnet ist.

Problematisch bei der Verwendung herkömmlicher Waste-Gate-Ventile ist der Umstand, dass die Ausschiebearbeit, die erforderlich ist, um die Verbrennungsprodukte aus den Zylindern der Brennkraftmaschine auszuschieben, vergleichsweise hoch ist, weil der Abgasmassenstrom gegen den Aufstaudruck der Turbine bzw. des Waste-Gates ausgeschoben werden muss. Insbesondere wird dabei ein Vorauslassstoß, der beim Öffnen des jeweiligen Auslassventils für eine kurzzeitige überproportionale Druckerhöhung sorgt, bei geöffnetem Waste-Gate-Ventil über die Turbine und über das Waste-Gate-Ventil abgebaut. Da die Brennkraftmaschine insoweit gegen den Abgasdruck arbeitet, reduziert sich ihr Wirkungsgrad.

Die vorliegende Erfindung beschäftigt sich mit dem Problem, für ein Brennkraftmaschinensystem bzw. für ein zugehöriges Betriebsverfahren eine verbesserte Ausführungsform anzugeben, die sich insbesondere durch einen erhöhten Wirkungsgrad auszeichnet, der bspw. zur Reduzierung des Kraftstoffverbrauchs genutzt werden kann.

Die Erfindung beruht auf dem allgemeinen Gedanken, das Bypassventil so auszugestalten, dass es in der Lage ist, die gewünschte Bypassströmung in Form einer gepulsten Bypassströmung bereitzustellen. Mit anderen Worten, das Bypassventil ist als schnellschaltendes Ventil ausgestaltet, das durch abwechselndes Öffnen und Schließen des Bypasses separate, zeitlich begrenzte und zeitlich voneinander beabstandete Bypassstrompulse erzeugt, die zusammen dann die gepulste Bypassströmung bilden. Bei einer solchen gepulsten Bypassströmung können sich somit insbesondere Phasen mit geöffnetem Bypass und Phasen mit geschlossenem Bypass abwechseln. Das Bypassventil ist dabei als schnellschaltendes Ventil ausgestaltet, um die gewünschte Abfolge von Öffnungs- und Schließvorgängen realisieren zu können. Insbesondere ermöglicht dieses Bypassventil Schaltzeiten zum Wechseln von der Schließstellung in die Offenstellung von weniger als 10 Millisekunden. Im Unterschied zu einen herkömmlichen stationär bzw. statisch betriebenen Waste-Gate-Ventil wird das Bypassventil bei der Erfindung dynamisch betrieben, sodass es auch bei einem stationären Betriebszustand der Brennkraftmaschine, also zum Einstellen eines im zeitlichen Mittel gleichbleibenden Bypassstroms permanent öffnet und schließt. Bei geöffnetem Bypassventil sinkt der Abgasgegendruck stark ab und der Abgasstrom kann nahezu vollständig über den Bypass die Turbine umgehen. Die Brennkraftmaschine muss dann nur eine signifikant reduzierte Ausschiebearbeit leisten, da bei geöffnetem Bypass die Turbine weitgehend umgangen wird und der Bypass durch das geöffnete Bypassventil nur einen geringen Durchströmungswiderstand besitzt. Die erforderliche Turbinenleistung wird dann in den Phasen erzeugt, in denen das Bypassventil geschlossen ist und dann der gesamte Abgasstrom durch die Turbine strömt. Insoweit wird hier bevorzugt auch eine gepulste Durchströmung bzw. Beaufschlagung der Turbine mit Abgas realisiert. In der Folge wird auch die Turbine gepulst angetrieben, und zwar auf einem erhöhten Druckniveau, was die Effizienz der Turbine erhöht. Zusammengefasst lässt sich die gepulste Bypassströmung auch dadurch beschreiben, dass bei geöffnetem Bypass nahezu der gesamte Abgasstrom die Turbine umgeht, während bei gesperrtem Bypass der gesamte Abgasstrom durch die Turbine strömt.

Entsprechend einer vorteilhaften Ausführungsform lassen sich hinsichtlich des Volumenstroms unterschiedliche Bypassströmungen durch Modulation eines Öffnungszeitpunkts und/oder eines Schließzeitpunkts des Bypassventils einstellen. Der Abstand zwischen einem Öffnungszeitpunkt und dem nächsten folgenden Schließzeitpunkt bestimmt eine Pulsweite des jeweiligen Bypassstrompulses. Durch Modulieren der Pulsweite kann somit der sich einstellende Volumenstrom der gepulsten Bypassströmung variiert werden. Insoweit wird hier eine Pulsweitenmodulation durchgeführt, um unterschiedliche Volumenströme bzw. Massenströme für die Bypassströmung einstellen zu können.

Bei üblicher Bauweise der Brennkraftmaschine als Kolbenmotor ist für die einzelnen Zylinder eine bestimmte Zündfolge vorgegeben. Dabei ist es insbesondere möglich, die Arbeitstakte der einzelnen Zylinder so aufeinander abzustimmen, dass das Ausschieben von Abgas aus den einzelnen Zylindern in gleichmäßigen Abständen erfolgt, sodass eine pulsierende Abgasströmung entsteht, die der Turbine zugeführt wird. Die einzelnen Abgaspulse werden dabei durch das Ausschieben des Abgases aus dem jeweiligen Zylinder nach dessen Expansionshub erzeugt. Insoweit liegen zylinderindividuelle bzw. zylinderspezifische Abgaspulse vor, die aufeinanderfolgen. Das Bypassventil kann entsprechend einer besonders vorteilhaften Ausführungsform nun gezielt so angesteuert werden, dass es für jeden ankommenden Abgaspuls einmal den Bypass öffnet und schließt und dadurch für jeden ankommenden Abgaspuls einen Bypasspuls erzeugt. Insoweit erfolgt eine Synchronisation der Bypasspulse zu den Abgaspulsen, wodurch die sich dynamisch ändernden Druckverhältnisse gezielt genutzt werden können, um die von der Brennkraftmaschine zu leistende Ausschiebearbeit zu reduzieren.

Bspw. kann das Bypassventil gezielt so angesteuert werden, dass es zeitlich nach dem jeweiligen ankommenden Abgaspuls den Bypass öffnet. Hierdurch wird erreicht, dass ein Anfangsabschnitt des ankommenden Abgaspulses durch die Turbine geführt wird, um die Turbine anzutreiben und um die erforderliche Turbinenleistung bereit zu stellen. Der übrige Abgaspuls wird dann durch den Bypass geleitet und bildet den Bypasspuls.

Besonders zweckmäßig ist es dabei, das Bypassventil so anzusteuern, dass es den Bypass zeitlich nach einem Vorauslassstoß des jeweils ankommenden Abgaspulses öffnet. Innerhalb des jeweiligen Abgaspulses bildet der Vorauslassstoß, der beim Öffnen des jeweiligen Auslassventils entsteht, eine deutlich überhöhte Druckspitze zu Beginn des jeweiligen Abgaspulses. Da das Bypassventil erst nach diesem Vorauslassstoß öffnet, kann der Vorauslassstoß zur Beaufschlagung der Turbine genutzt werden. Hierdurch erfolgt die Beaufschlagung der Turbine auf einem erhöhten Druckniveau, was deren Wirkungsgrad verbessert. Folglich kann der Bypasspuls zeitlich vergleichsweise lang ausgedehnt werden, also eine besonders große Pulsweite aufweisen, sodass die Brennkraftmaschine weitgehend nur gegen den Durchströmungswiderstand des geöffneten Bypasses arbeiten muss, sodass die Ausschiebearbeit reduziert und die Effektivität der Brennkraftmaschine erhöht ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte schaltplanartige Prinzipskizze eines Brennkraftmaschinensystems,
- Fig. 2: ein Druck-Zeit-Diagramm für einen Brennraumdruckverlauf, mit einem Druckverlauf bis zu einer Turbine, mit Ventilerhebungskurven eines Einlass- und Auslassventils sowie ein Verlauf eines mit Hilfe eines Bypassventils gesteuerten Bypassquerschnitts,
- Fig. 3: ein weiteres Druck-Zeit-Diagramm mit einem Druckverlauf stromauf der Turbine sowie einem Verlauf des mit dem dynamischen Bypassventil gesteuerten Bypassquerschnitts im Vergleich zu einem Verlauf eines mit Hilfe eines konventionellen statischen WasteGate-Ventils gesteuerten Bypassquerschnitts.

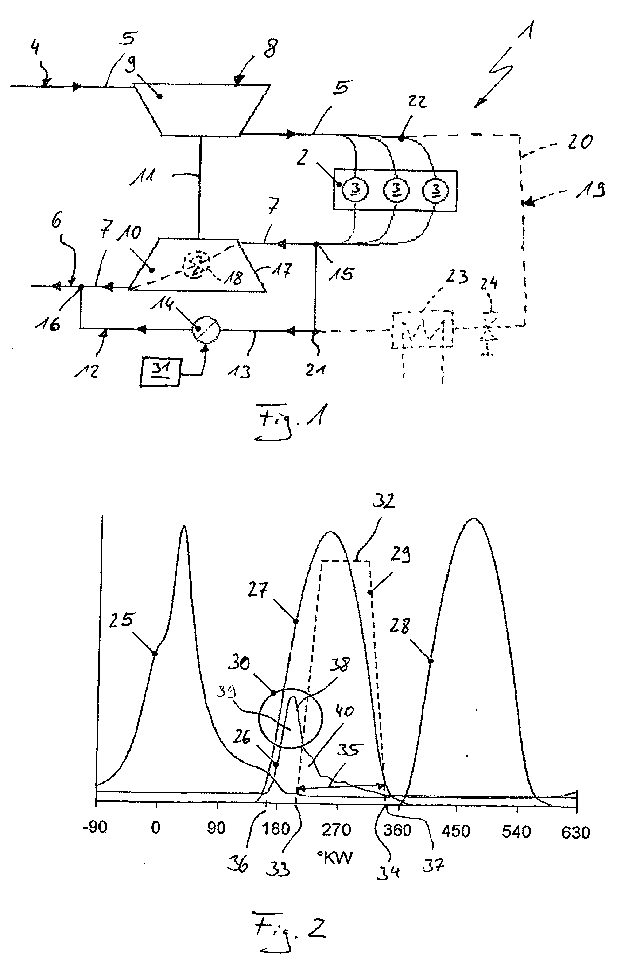

Entsprechend Fig. 1 umfasst ein Brennkraftmaschinensystem 1, das in einem Kraftfahrzeug zur Anwendung kommen kann, eine Brennkraftmaschine 2, die vorzugsweise als Kolbenmotor ausgestaltet ist und dementsprechend mehrere Zylinder 3 aufweist. Das Brennkraftmaschinensystem 1 weist außerdem eine Frischluftanlage 4 auf, die eine Frischluftleitung 5 besitzt und die der Brennkraftmaschine 2 Frischluft zuführt. Außerdem ist eine Abgasanlage 6 vorgesehen, die eine Abgasleitung 7 aufweist und Abgas von der Brennkraftmaschine 2 abführt.

Das Brennkraftmaschinensystem 1 ist außerdem mit einem Abgasturbolader 8 ausgestattet, der in üblicher Weise einen Verdichter 9 aufweist, der in der Frischluftleitung 5 angeordnet ist. Ferner ist eine Turbine 10 vorgesehen, die in der Abgasleitung 7 angeordnet ist. Verdichter 9 und Turbine 10 bzw. ein nicht gezeichnetes Verdichterrad und ein ebenfalls nicht gezeichnetes Turbinenrad sind über eine gemeinsame Antriebswelle 11 miteinander verbunden. Zur Umgehung der Turbine 10 ist ein Bypass 12 vorgesehen, der eine Bypassleitung 13 und ein Bypassventil 14 aufweist. Das Bypassventil 14 ist dabei in der Bypassleitung 13 angeordnet. Die Bypassleitung 13 zweigt an einer ersten Anschlussstelle 15 stromauf der Turbine 10 von der Abgasleitung 7 ab und mündet über eine zweite Anschlussstelle 16 stromab der Turbine 10 wieder in die Abgasleitung 7 ein. Der hier vorgestellte Bypass 12 kann somit zusätzlich zu einem Gehäuse 17 der Turbine 10 vorgesehen sein und insbesondere vollständig außerhalb des Turbinengehäuses 17 an der Turbine 10 vorbei geleitet sein. Ebenso ist auch eine integrale Bauweise denkbar, bei welcher die Bypassleitung 13 in das Gehäuse 17 der Turbine 10 integriert ist. Ebenso kann dann auch das Bypassventil 14 in das Turbinengehäuse 17 integriert sein. Jedenfalls unterscheidet sich dieser Bypass 12 von einem in Fig. 1 mit unterbrochener Linie angedeuteten Waste-Gate-Ventil 18, das bei üblicher Bauweise innerhalb des Gehäuses 17 die Hochdruckseite unter Umgehung des Turbinenrads mit der Niederdruckseite verbindet. Ein derartiges konventionelles Waste-Gate-Ventil 18 kann grundsätzlich zusätzlich zu dem hier vorgestellten Bypass 12 vorgesehen sein, um für bestimmte Betriebszustände eine erhöhte Flexibilität besitzen zu können. Grundsätzlich ist ein derartiges, konventionelles Waste-Gate-Ventil 18 jedoch nicht erforderlich, wenn der gesteuerte Bypass 12 vorhanden ist.

Das Brennkraftmaschinensystem 1 kann optional mit einer mit unterbrochener Linie dargestellten Abgasrückführanlage 19 ausgestattet sein, die eine Rückführleitung 20 aufweist und mit deren Hilfe Abgas von der Abgasanlage 6 zur Frischluftanlage 4 rückführbar ist. Die Rückführleitung 20 verbindet hierzu eine abgasseitige Entnahmestelle 21 mit einer frischluftseitigen Einleitstelle 22. Die Entnahmestelle 21 ist dabei stromauf des Bypassventils 14 angeordnet. Erfindungsgemäß ist die Entnahmestelle 21 an der Bypassleitung 13 angeordnet ist, sodass das rückzuführende Abgas nicht direkt der Abgasleitung 7, sondern indirekt über die Bypassleitung 13 entnommen wird. Optional kann die Abgasrückführanlage 19 in der Rückführleitung 20 einen Abgasrückführkühler 23 und eine Ventileinrichtung 24 aufweisen.

Im Diagramm der Fig. 2 bildet die Abszisse eine Zeitachse, auf der ein Kurbelwellenwinkel in °KW aufgetragen ist. Exemplarisch ist dabei ein Bereich von 720°KW aufgetragen, was zwei Umdrehungen der Kurbelwelle und somit einem Arbeitstakt eines Zylinders 3 bei einem Vier-Takt-Motor entspricht. Die Ordinate repräsentiert für einen Verlauf 25 sowie für einen Verlauf 26 einen Druck, für eine Kurve 27 und eine Kurve 28 einen Hub und für einen weiteren Verlauf 29 einen Querschnitt.

Der Verlauf 25 repräsentiert dabei den Druckverlauf in einem Zylinder 3 während seines Arbeitstakts, also einen Brennraumdruckverlauf. Der Verlauf 26 repräsentiert den Druckverlauf vor der Turbine 10, also einen Druckverlauf in der Abgasleitung 7 vom Zylinder 3 zur Turbine 10. Dabei ist dieser Verlauf 26 aus Darstellungsgründen hoch skaliert und verschoben. Die Kurve 27 repräsentiert eine Ventilerhebungskurve eines Auslassventils, das dem hier betrachteten Zylinder 3 zugeordnet ist. Es ist klar, dass es sich hierbei nicht um ein einzelnes Ventil handeln muss. Die Kurve 28 repräsentiert eine Erhebungskurve eines Einlassventils des hier betrachteten Zylinders 3. Auch hier ist klar, dass es sich nicht um ein einzelnes Einlassventil handeln muss. Der Verlauf 29 gibt das Steuerverhalten des Bypassventils 14 wieder. Dabei repräsentiert der Verlauf 29 den mit Hilfe des Bypassventils 14 gesteuerten, durchströmbaren Querschnitt der Bypassleitung 13. Auf der Abszisse ist der durchströmbare Querschnitt der Bypassleitung 13 auf den Wert 0 reduziert, sodass der Bypass 12 vollständig gesperrt ist. Beim horizontalen Maximum des Verlaufs 29 ist das Bypassventil 14 maximal geöffnet. Dementsprechend ist dann der größte einstellbare, durchströmbare Querschnitt für die Bypassleitung 13 eingestellt und der Bypass 12 ist maximal geöffnet. Durch die extrem kurzen Schaltzeiten des Bypassventils 14 sind die Öffnungsflanke und die Schließflanke des Verlaufs 29 vergleichsweise steil. Erkennbar ist hier auch, dass die Schaltzeiten des Bypassventils 14 etwa in der gleichen Größenordnung liegen wie die Schaltzeiten der Gaswechselventile.

Im Hinblick auf den Druckverlauf 26 in der Abgasleitung 7 stromauf der Turbine 10 ist mit einem Kreis ein Vorauslassstoß 30 markiert, der unmittelbar nach dem Öffnen des Auslassventils entsteht.

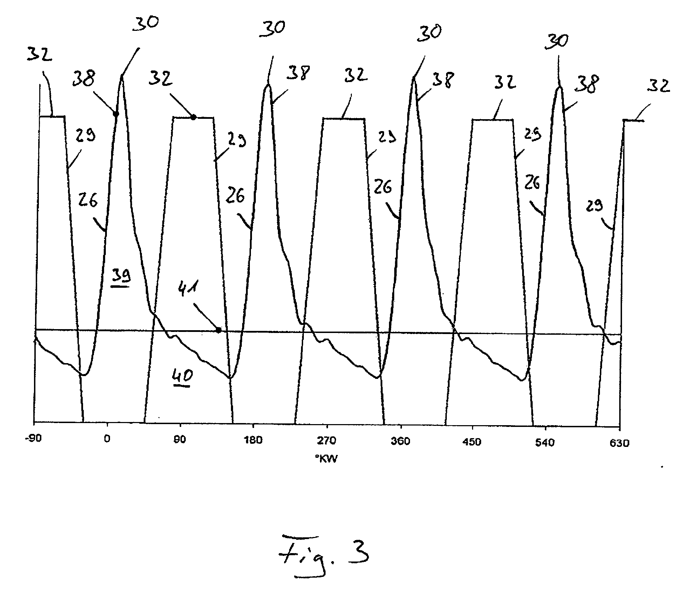

Das Bypassventil 14 wird bspw. von einer entsprechenden, in Fig. 1 symbolisch angedeuteten Steuereinrichtung 31 so betrieben, dass es einzelne Bypassstrompulse oder kurz Bypasspulse erzeugt, die in ihrer Abfolge eine gepulste Bypassströmung generieren. Der in Fig. 2 wiedergegebene Verlauf 29 für den durchströmbaren Querschnitt der Bypassleitung 13 repräsentiert dabei gleichzeitig einen derartigen Bypassstrompuls, der in den Figuren 2 und 3 mit 32 bezeichnet ist.

Durch Auswählen eines Öffnungszeitpunkts 33 und/oder eines Schließzeitpunkts 34 kann ein Pulsweite 35 für den einzelnen Bypassstrompuls 32 eingestellt werden. Mittels einer derartigen Pulsweitenmodulation können unterschiedliche Volumenströme oder Massenströme für die Bypassströmung eingestellt werden, welche die gepulste Bypassströmung im Mittel besitzt. Erkennbar wird der Öffnungszeitpunkt 33 gezielt so gelegt, dass er zeitlich nach einem Anfang 36 des Druckverlaufs 26 stromauf der Turbine 10 liegt. Im Beispiel ist der Öffnungszeitpunkt 33 außerdem gezielt so positioniert, dass er zeitlich nach dem Vorauslassstoß 30 liegt. Der Schließzeitpunkt 34 kann zweckmäßig so gewählt sein, dass er im Wesentlichen mit einem Ende 37 des Druckverlaufs 26 stromauf der Turbine 10 zusammenfällt. In diesem Bereich schließt auch das Auslassventil.

Der Druckverlauf 26 stromauf der Turbine 10 repräsentiert dabei einen Abgaspuls 38, der durch den Ausstoß des Abgases aus dem jeweiligen Zylinder 3 entsteht und sich in der Abgasleitung 7 vom jeweiligen Zylinder 3 bis Turbine 10 ausbreitet.

Durch die gezielte Synchronisation des Bypassventils 14 auf den ankommenden Abgaspuls 38 ist es möglich, einen Anfangsabschnitt 39 des Abgaspulses 38 der Turbine 10 zuzuführen, während ein Endabschnitt 40 des Abgaspulses 38 an der Turbine 10 vorbei durch den Bypass 12 abgeleitet wird. Der Anfangsabschnitt 39 und der Endabschnitt 40 sind in Fig. 2 durch die Öffnungsflanke des Querschnittsverlaufs 29 bzw. durch den Beginn des Bypassstrompulses 32 voneinander getrennt. Zweckmäßig liegt im Anfangsabschnitt 39 der Vorauslassstoß 30, wodurch das Abgas der Turbine 10 unter einem vergleichsweise hohen Druck zugeführt werden kann. Dies ist für den Wirkungsgrad der Turbine 10 von Vorteil. Zeitlich kann der der Turbine 10 zugeführte Anfangsabschnitt 39 in vielen Betriebszuständen der Brennkraftmaschine 2, vorzugsweise bei Teillast, deutlich kleiner sein als der durch den Bypass 12 geführte Endabschnitt 40. Somit arbeitet die Brennkraftmaschine 2 zu einem vergleichsweise großen Anteil nur gegen den Durchströmungswiderstand des Bypasses 12 und nicht gegen den Druck der Turbine 10. Bei geöffnetem Bypassventil 14 ist der durchströmbare Querschnitt des Bypasses 12 groß, insbesondere ist das Bypassventil 14 vollständig geöffnet, was den Gegendruck senkt. Da das Bypassventil 14 außerdem einen vergleichsweise großen durchströmbaren Querschnitt in der Bypassleitung 13 steuern kann, kann der durchströmbare Querschnitt des Bypasses 12 sehr klein ausgelegt werden. In der Folge ist die Ausschiebearbeit der Brennkraftmaschine 2 erheblich reduziert.

Während Fig. 2 quasi die Zustände in einem Einzylindermotor repräsentiert, zeigt Fig. 3 exemplarisch die Zustände für einen Vierzylindermotor. Erkennbar sind die einzelnen Abgaspulse 38 der vier Zylinder 3, die entsprechend einer vorbestimmten Zündfolge gezündet und entspannt werden. Durch die Ausschiebung des Arbeitsgases entstehen die Abgaspulse 38. Dies entspricht wieder dem Druckverlauf 26 in der Abgasleitung 7 stromauf der Turbine 10. Ebenfalls enthält Fig. 3 die Bypassstrompulse 32, die mit Hilfe des Bypassventils 14 im Bypass 12 erzeugt werden. Sie entsprechen wieder dem Öffnungsquerschnittsverlauf 29 in der Bypassleitung 13. Erkennbar erzeugt das Bypassventil 14 für jeden Abgaspuls 38 einen Bypassstrompuls 32. Dementsprechend schaltet das Bypassventil 14 während zwei Umdrehungen der Kurbelwelle insgesamt acht mal, nämlich vier mal zum Öffnen und vier mal zum Schließen der Bypassleitung 13. Bei jedem einzelnen Abgaspuls 38 schneidet der jeweilige Bypasspuls 32 den Anfangsabschnitt 39, der den Vorauslassstoß 30 umfasst, vom Endabschnitt 40 ab, in dem das Abgas einen deutlich niedrigeren Druck besitzt.

Erkennbar ergibt sich für das Bypassventil 14 ein hochdynamischer Vorgang mit permanent aufeinanderfolgenden Öffnungsvorgängen mit insbesondere vollständig geöffnetem Bypass 12 und Schließvorgängen mit vollständig geschlossenem Bypass 12, auch wenn insgesamt im zeitlichen Mittel ein konstanter Bypassvolumenstrom eingestellt werden soll. Im Vergleich dazu ist in Fig. 3 ein Verlauf 41 für den durchströmbaren Querschnitt der Bypassleitung 13 eingetragen, der sich mit Hilfe eines konventionellen statischen Waste-Gate-Ventils einstellt. Erkennbar ist der Verlauf 41 konstant und dementsprechend durch eine gerade, parallel zur Abszisse verlaufende Linie gebildet.

Beim hier vorgestellten Brennkraftmaschinensystem 1 wird ein Großteil der Turbinenarbeit bei geschlossenem Bypassventil 14 erzielt, während das Ausschieben der Verbrennungsprodukte aus den Zylindern 3 hauptsächlich bei geöffnetem Bypassventil 14 erfolgt. Die von der Turbine 3 abgegebene Leistung kann durch die zuvor beschriebene Pulsweitenmodulation variiert werden, also durch entsprechendes Verschieben des Öffnungszeitpunkts 33 und/oder des Öffnungszeitpunkts 34, um die Pulsweite 35, also die Öffnungsdauer einzustellen. Im Unterschied zu einem konventionellen Waste-Gate-Ventil, bei dem die Höhe des an der Turbine 10 vorbeigeleiteten Bypassstroms durch eine Variation der frei gegebenen Querschnittsfläche im Bypass 12 erzielt wird, wird beim hier vorgestellten Bypassventil 14 stets die maximal mögliche Querschnittsfläche der Bypassleitung 13 freigegeben. Die Höhe des an der Turbine 10 vorbeigeleiteten Bypassstroms wird durch die Lage und Dauer des Öffnungsfensters, also des Bypassstrompulses 32 bestimmt.

Durch das intermittierende Öffnen und Schließen des Bypasses 12 können außerdem die in der Abgasanlage 7 vorhandenen Druckpulsationen verstärkt bzw. beeinflusst werden. Dies lässt sich insbesondere für eine hochdruckseitige Abgasrückführung nutzen. Insbesondere ist es daher möglich, das Bypassventil 14 zusätzlich so anzusteuern, dass damit auch eine Abgasrückführrate beeinflusst bzw. eingestellt werden kann.

Das hier vorgestellte Bypassventil 14 kann auch stationär betrieben werden, bspw. um den Bypass 12 permanent zu öffnen oder permanent zu schließen oder auch um eine beliebige Zwischenstellung stationär einzustellen. In Motorbetriebspunkten, die keine Aufladung benötigen, kann durch permanentes Öffnen des Bypasses 12 der Abgasentalpiegehalt stromab der Turbine 10 bzw. vor einem - hier nicht gezeigten - Abgasnachbehandlungssystem erhöht werden. Insbesondere bei einem Kaltstart ist es dadurch möglich, den Wärmeeintrag in das Abgasnachbehandlungssystem zu erhöhen. Dadurch verkürzt sich die Dauer bis zum Erreichen einer Betriebstemperatur des Abgasnachbehandlungssystem.

## Patentansprüche

1. Brennkraftmaschinensystem, insbesondere in einem Kraftfahrzeug,
- mit einer Brennkraftmaschine (2),
- mit einer Frischluftanlage (4) zum Zuführen von Frischluft zur Brennkraftmaschine (2),
- mit einer Abgasanlage (6) zum Abführen von Abgas von der Brennkraftmaschine (2),
- mit einem Abgasturbolader (8), dessen Turbine (10) in einer Abgasleitung (7) der Abgasanlage (6) angeordnet ist und dessen Verdichter (9) in einer Frischluftleitung (5) der Frischluftanlage (4) angeordnet ist,
- mit einem die Turbine (10) umgehenden Bypass (12),
- mit einem Bypassventil (14) zum Einstellen einer gewünschten Bypassströmung,
- wobei das Bypassventil (14) so ausgestaltet ist, dass es die gewünschte Bypassströmung durch abwechselndes Öffnen und Schließen des Bypasses (12) in Form einer gepulsten Bypassströmung erzeugt,
- wobei eine Abgasrückführanlage (19) vorgesehen ist, deren Rückführleitung (20) von einer abgasseitigen Entnahmestelle (21) zu einer frischluftseitigen Einleitstelle (22) führt,
**dadurch gekennzeichnet,**
- **dass** die Rückführleitung (20) über die Entnahmestelle (21) an eine Bypassleitung (13) angeschlossen ist,
- **dass** die Entnahmestelle (21) stromauf des Bypassventils (14) an der Bypassleitung (13) angeordnet ist,
- **dass** die Bypassleitung (13) das Bypassventil (14) enthält und stromauf der Turbine (10) von der Abgasleitung (7) abzweigt und stromab der Turbine (10) in die Abgasleitung (7) einmündet.

2. Brennkraftmaschinensystem nach Anspruch 1,
**dadurch gekennzeichnet,**
- **dass** das Bypassventil (14) simultan zur gepulsten Bypassströmung auch eine gepulste Durchströmung der Turbine (12) erzeugt, und/oder
- **dass** sich bei der gepulsten Bypassströmung Phasen mit geöffnetem Bypass (12) und Phasen mit gesperrtem Bypass (12) abwechseln, wobei bei geöffnetem Bypass (12) nahezu der gesamte Abgasstrom die Turbine (10) umgeht, während bei gesperrtem Bypass (12) der gesamte Abgasstrom durch die Turbine (10) strömt.

3. Brennkraftmaschinensystem nach Anspruch 1,
**dadurch gekennzeichnet,**
**dass** die Einleitstelle (22) stromab des Verdichters (9) angeordnet ist.

4. Verfahren zum Betreiben eines Brennkraftmaschinensystems (1), insbesondere in einem Kraftfahrzeug,
- wobei das Brennkraftmaschinensystem (1) eine Brennkraftmaschine (2), eine Frischluftanlage (4) zum Zuführen von Frischluft zur Brennkraftmaschine (2), eine Abgasanlage (6) zum Abführen von Abgas von der Brennkraftmaschine (2), einen Abgasturbolader (8) mit einer in der Abgasanlage (6) angeordneten Turbine (10) und einem in der Frischluftanlage (4) angeordneten Verdichter (9) und einen mittels eines Bypassventils (14) steuerbaren Bypass (12) zur Umgehung der Turbine (10) aufweist,
- wobei eine Abgasrückführanlage (19) vorgesehen ist, deren Rückführleitung (20) von einer abgasseitigen Entnahmestelle (21) zu einer frischluftseitigen Einleitstelle (22) führt,
- wobei die Rückführleitung (20) über die Entnahmestelle (21) an eine Bypassleitung (13) des Bypasses (12) angeschlossen ist,
- wobei die Entnahmestelle (21) stromauf des Bypassventils (14) an der Bypassleitung (13) angeordnet ist,
- wobei die Bypassleitung (13) das Bypassventil (14) enthält und stromauf der Turbine (10) von der Abgasleitung (7) abzweigt und stromab der Turbine (10) in die Abgasleitung (7) einmündet,
- bei dem eine gewünschte Bypassströmung durch abwechselndes Öffnen und Schließen des Bypasses (12) in Form einer gepulsten Bypassströmung erzeugt wird.

5. Verfahren nach Anspruch 4,
**dadurch gekennzeichnet,**
- **dass** simultan zur gepulsten Bypassströmung auch eine gepulste Durchströmung der Turbine (12) mit Abgas erzeugt wird, und/oder
- **dass** bei der gepulsten Bypassströmung Phasen mit geöffnetem Bypass (12) und Phasen mit gesperrtem Bypass (12) abgewechselt werden, wobei bei geöffnetem Bypass (12) nahezu der gesamte Abgasstrom die Turbine (10) umgeht, während bei gesperrtem Bypass (12) der gesamte Abgasstrom durch die Turbine (10) strömt.

6. Verfahren nach Anspruch 4 oder 5,
**dadurch gekennzeichnet,**
**dass** verschiedene Bypassströmungen durch Modulation eines Öffnungszeitpunkts (33) und/oder eines Schließzeitpunkts (34) und/oder einer Öffnungszeitdauer (35) eingestellt werden.

7. Verfahren nach einem der Ansprüche 4 bis 6,
**dadurch gekennzeichnet,**
- **dass** der Turbine (10) die Abgase von mehreren Zylinder (3) der Brennkraftmaschine (2) entsprechend einer vorgegebenen Zündfolge der Zylinder (3) nacheinander zugeführt werden, wodurch eine pulsierende Abgasströmung mit aufeinanderfolgenden, zylinderspezifischen Abgaspulsen (38) entsteht,
- **dass** das Bypassventil (14) so angesteuert wird, dass es für jeden ankommenden Abgaspuls (38) einmal den Bypass (12) öffnet und schließt und dadurch einen Bypasspuls (32) erzeugt.

8. Verfahren nach einem der Ansprüche 4 bis 7,
**dadurch gekennzeichnet,**
**dass** das Bypassventil (14) so angesteuert wird, dass es zeitlich nach dem jeweiligen ankommenden Abgaspuls (38) den Bypass (12) öffnet.

9. Verfahren nach einem der Ansprüche 4 bis 8,
**dadurch gekennzeichnet,**
**dass** das Bypassventil (14) so angesteuert wird, dass es den Bypasspuls (32) zeitlich nach einem Vorauslassstoß (30) des jeweiligen ankommenden Abgaspulses (38) öffnet.

10. Verfahren nach einem der Ansprüche 4 bis 9,
**dadurch gekennzeichnet,**
**dass** das Bypassventil (14) so angesteuert wird, dass es den Bypasspuls (32) im Bereich eines Endes (37) des jeweils ankommenden Abgaspulses (38) schließt.

## Claims

1. An internal combustion engine system, in particular in a motor vehicle,
- having an internal combustion engine (2),
- having a fresh air system (4) for supplying fresh air to the internal combustion engine (2),
- having an exhaust system (6) for discharging exhaust gas from the internal combustion engine (2),
- having an exhaust gas turbocharger (8), the turbine (10) of which is arranged in an exhaust line (7) of the exhaust system (6), and the compressor (9) of which is arranged in a fresh air line (5) of the fresh air system (4),
- having a bypass (12) that bypasses the turbine (10),
- having a bypass valve (14) for setting a desired bypass flow,
- the bypass valve (14) being designed such that it produces the desired bypass flow in the form of a pulsed bypass flow by alternately opening and closing the bypass (12),
- an exhaust gas recirculation system (19) being provided, the recirculation line (20) of which leads from an exhaust-side extraction point (21) to a fresh-air-side introduction point (22),
**characterised in that**
- the recirculation line (20) is attached to a bypass line (13) via the extraction point (21),
- the extraction point (21) is arranged on the bypass line (13) upstream of the bypass valve (14),
- the bypass line (13) contains the bypass valve (14) and branches off from the exhaust line (7) upstream of the turbine (10) and opens into the exhaust line (7) downstream of the turbine (10).

2. The internal combustion engine system according to Claim 1,
**characterised in that**
- the bypass valve (14) also produces a pulsed flow through the turbine (12) simultaneously to the pulsed bypass flow, and/or
- in the pulsed bypass flow, phases with the bypass (12) open and phases with the bypass (12) closed alternate, wherein virtually the entire exhaust stream bypasses the turbine (10) when the bypass (12) is open, and the entire exhaust stream flows through the turbine (10) when the bypass (12) is closed.

3. The internal combustion engine system according to Claim 1, **characterised in that** the introduction point (22) is arranged downstream of the compressor (9).

4. A method for operating an internal combustion engine system (1), in particular in a motor vehicle,
- wherein the internal combustion engine system (1) has an internal combustion engine (2), a fresh air system (4) for supplying fresh air to the internal combustion engine (2), an exhaust system (6) for discharging exhaust gas from the internal combustion engine (2), an exhaust gas turbocharger (8) having a turbine (10) arranged in the exhaust system (6) and a compressor (9) arranged in the fresh air system (4), and a bypass (12) that can be controlled by means of a bypass valve (14) to bypass the turbine (10),
- wherein an exhaust gas recirculation system (19) is provided, the recirculation line (20) of which leads from an exhaust-side extraction point (21) to a fresh-air-side introduction point (22),
- wherein the recirculation line (20) is attached to a bypass line (13) of the bypass (12) via the extraction point (21),
- wherein the extraction point (21) is arranged on the bypass line (13) upstream of the bypass valve (14),
- wherein the bypass line (13) contains the bypass valve (14) and branches off from the exhaust line (7) upstream of the turbine (10) and opens into the exhaust line (7) downstream of the turbine (10),
- in which a desired bypass flow is produced in the form of a pulsed bypass flow by alternately opening and closing the bypass (12).

5. The method according to Claim 4,
**characterised in that**
- a pulsed flow through the turbine (12) is also produced with exhaust gas simultaneously to the pulsed bypass flow, and/or
- in the pulsed bypass flow, phases with the bypass (12) open and phases with the bypass (12) closed are alternated, wherein virtually the entire exhaust stream bypasses the turbine (10) when the bypass (12) is open, and the entire exhaust stream flows through the turbine (10) when the bypass (12) is closed.

6. The method according to Claim 4 or 5, **characterised in that** different bypass flows are set by modulating an opening time point (33) and/or a closing time point (34) and/or an opening duration (35).

7. The method according to any one of Claims 4 to 6,
**characterised in that**
- the exhaust gases from a plurality of cylinders (3) of the internal combustion engine (2) are supplied consecutively to the turbine (10) according to a predefined ignition sequence of the cylinders (3), as a result of which a pulsing exhaust gas flow with successive, cylinder-specific exhaust pulses (38) is produced,
- the bypass valve (14) is actuated such that it opens and closes the bypass (12) once for each incoming exhaust pulse (38) and thereby produces a bypass pulse (32).

8. The method according to any one of Claims 4 to 7,
**characterised in that** the bypass valve (14) is actuated such that it opens the bypass (12) after the respective incoming exhaust pulse (38).

9. The method according to any one of Claims 4 to 8,
**characterised in that** the bypass valve (14) is actuated such that it opens the bypass pulse (32) after a high-pressure head (30) of the respective incoming exhaust pulse (38).

10. The method according to any one of Claims 4 to 9,
**characterised in that** the bypass valve (14) is actuated such that it closes the bypass pulse (32) in the region of a tail (37) of the respective incoming exhaust pulse (38).

## Revendications

1. Système de moteur à combustion interne, notamment dans un véhicule automobile,
- comportant un moteur à combustion interne (2),
- comportant une installation d'air frais (4) pour alimenter de l'air frais dans le moteur à combustion interne (2),
- comportant une installation de gaz d'échappement (6) pour évacuer les gaz d'échappement du moteur à combustion interne (2),
- comportant un turbocompresseur de gaz d'échappement (8), dont la turbine (10) est disposée dans une conduite de gaz d'échappement (7) de l'installation de gaz d'échappement (6) et dont le compacteur (9) est disposé dans une conduite d'air frais (5) de l'installation d'air frais (4),
- comportant une dérivation (12) contournant la turbine (10),
- comportant une soupape de dérivation (14) pour régler un flux de dérivation souhaité,
- dans lequel la soupape de dérivation (14) est conçue de telle sorte qu'elle génère le flux de dérivation souhaité par ouverture et fermeture alternée de la dérivation (12) sous la forme d'un flux de dérivation pulsé,
- dans lequel une installation de réintroduction de gaz d'échappement (19) est prévue, dont la conduite de réintroduction (20) mène d'un point de prélèvement du côté du gaz d'échappement (21) à un point d'introduction (22) du côté d'air frais,
**caractérisé en ce que**
- la conduite de réintroduction (20) est raccordée par l'intermédiaire du point de prélèvement (21) à une conduite de dérivation (13),
- **en ce que** le point de prélèvement (21) est disposé en amont de la soupape de dérivation (14) sur la conduite de dérivation (13),
- la conduite de dérivation (13) contient la soupape de dérivation (14) et dévie de la conduite de gaz d'échappement (7) en amont de la turbine (10) et débouche dans la conduite de gaz d'échappement (7) en aval de la turbine (10).

2. Système de moteur à combustion interne selon la revendication 1,
**caractérisé en ce que**
- la soupape de dérivation (14) génère simultanément au flux de dérivation également une débit pulsé de la turbine (12), et/ou
- dans le flux de dérivation pulsé alternent des phases avec dérivation ouverte (12) et des phases avec dérivation bloquée (12), dans lequel quand la dérivation (12) est ouverte approximativement la totalité du flux de gaz d'échappement contourne la turbine (10), alors que quand la dérivation (12) est bloquée la totalité du flux de gaz d'échappement s'écoule à travers a turbine (10).

3. Système de moteur à combustion interne selon la revendication 1, **caractérisé en ce que** le point d'introduction (22) est disposé en aval du compacteur (9).

4. Procédé de fonctionnement d'un système de moteur à combustion interne (1), notamment dans un véhicule automobile,
- dans lequel le système de moteur à combustion interne (1) présente un moteur à combustion interne (2), une installation d'air frais (4) pour alimenter de l'air frais dans le moteur à combustion interne (2), une installation de gaz d'échappement (6) pour évacuer le gaz d'échappement hors du moteur à combustion interne (2), un turbocompresseur de gaz d'échappement (8) comportant une turbine (10) disposée dans l'installation de gaz d'échappement (6) et un compacteur (9) disposé dans l'installation d'air frais (4) et une dérivation (12) pouvant être commandée au moyen d'une soupape de dérivation (14) pour contourner la turbine (10),
- dans lequel une installation de réintroduction de gaz d'échappement (19) est prévue, dont la conduite de gaz d'échappement (20) mène d'un point de prélèvement du côté du gaz d'échappement (21) à un point d'introduction (22) du côté d'air frais,
- dans lequel la conduite de réintroduction (20) est raccordée par l'intermédiaire du point de prélèvement (21) à une conduite de dérivation (13) de la dérivation (12),
- dans lequel le point de prélèvement (21) est disposé en amont de la soupape de dérivation (14) sur la conduite de dérivation (13),
- dans lequel la conduite de dérivation (13) contient la soupape de dérivation (14) et dévie de la conduite de gaz d'échappement (7) en amont de la turbine (10) et débouche dans la conduite de gaz d'échappement (7) en aval de la turbine (10),
- dans lequel est flux de dérivation souhaité est généré en ouvrant et fermant en alternance la dérivation (12) sous la forme d'un flux de dérivation pulsé.

5. Procédé selon la revendication 4,
**caractérisé en ce que**
- simultanément au flux de dérivation pulsé un débit pulsé de la turbine (12) est également généré avec le gaz d'échappement, et/ou
- dans le flux de dérivation pulsé sont alternées des phases avec dérivation ouverte (12) et des phases avec dérivation bloquée (12), dans lequel quand la dérivation (12) est ouverte approximativement la totalité du flux de gaz d'échappement contourne la turbine (10), alors que quand la dérivation (12) est bloquée la totalité du flux de gaz d'échappement s'écoule à travers la turbine (10).

6. Procédé selon la revendication 4 ou 5, **caractérisé en ce que** différents flux de dérivation sont réglés par modulation d'un point temporel d'ouverture (33) et/ou d'un point temporel de fermeture (34) et/ou d'une durée temporelle d'ouverture (35).

7. Procédé selon une des revendications 4 à 6,
**caractérisé en ce que**
- dans la turbine (10) sont alimentés les gaz d'échappement de plusieurs cylindres (3) du moteur à combustion interne (2) les uns après les autres de manière correspondante à une séquence d'allumage prescrite des cylindres (3), moyennant qui un flux de gaz d'échappement pulsant est généré avec des impulsions de gaz d'échappement (38) se succédant, spécifiques au cylindre,
- la soupape de dérivation (14) est commandée de telle sorte qu'elle ouvre et ferme une fois la dérivation (12) pour chaque impulsion de gaz d'échappement (38) entrante et génère ainsi une impulsion de dérivation (32).

8. Procédé selon une des revendications 4 à 7,
**caractérisé en ce que** la soupape de dérivation (14) est commandée de telle sorte qu'elle ouvre ponctuellement la dérivation (12) après l'impulsion de gaz d'échappement entrante respective (38).

9. Procédé selon une des revendications 4 à 8,
**caractérisé en ce que** la soupape de dérivation (14) est commandée de telle sorte qu'elle ouvre l'impulsion de dérivation (32) ponctuellement après un choc de déclenchement (30) de l'impulsion de gaz d'échappement entrante respective (38).

10. Procédé selon une des revendications 4 à 9,
**caractérisé en ce que** la soupape de dérivation (14) est commandée de telle sorte qu'elle ferme l'impulsion de dérivation (32) dans la région d'une fin (37) de l'impulsion de gaz d'échappement entrante respective (38).
